Europäisches Patentamt

European Patent Office

Office européen des brevets

(19)

(11) Veröffentlichungsnummer: **0 259 547**
**B1**

(12) **EUROPÄISCHE PATENTSCHRIFT**

(45) Veröffentlichungstag der Patentschrift: **29.08.90**

(21) Anmeldenummer: **87108459.6**

(22) Anmeldetag: **11.06.87**

(51) Int. Cl.⁵: **E 03 F 5/14,** B 01 D 33/06

(54) **Vorrichtung zum Entfernen von Rechen- und/oder Siebgut aus in einem Gerinne strömender Flüssigkeit.**

(30) Priorität: **10.09.86 DE 3630755**

(43) Veröffentlichungstag der Anmeldung:
**16.03.88 Patentblatt 88/11**

(45) Bekanntmachung des Hinweises auf die
Patenterteilung:
**29.08.90 Patentblatt 90/35**

(84) Benannte Vertragsstaaten:
**AT BE CH ES FR GB IT LI LU NL SE**

(56) Entgegenhaltungen:
EP-A-0 163 158
DE-A-3 019 127
DE-B-1 171 346
US-A-1 948 125

SCHWEIZER INGENIEUR UND ARCHITEKT,
Band 99, Nr.9, 26. Februar 1981, Seiten 175-180,
Zürich, CH; M. MEYER: "Siebanlagen zur
Regenwasserbehandlung"

(73) Patentinhaber: **Huber, Hans-Georg**
**Zum Rachental 8**
**D-8434 Berching (DE)**

(72) Erfinder: **Huber, Hans-Georg**
**Zum Rachental 8**
**D-8434 Berching (DE)**

(74) Vertreter: **Patentanwälte Dipl.-Ing. Rudolf**
**Bibrach Dipl.-Ing. Elmar Rehberg**
**Pütterweg 6 Postfach 738**
**D-3400 Göttingen (DE)**

**Beschreibung**

Die Erfindung bezieht sich auf eine Vorrichtung zum Entfernen von Rechen- und/oder Siebgut aus in einem Gerinne strömender Flüssigkeit, mit einem schräggestellten, teilweise in die Flüssigkeit eintauchenden zylindermantelförmigen und umlaufend angetriebenen Fangrost, der anströmseitig eine offene und abströmseitig eine geschlossene Stirnfläche aufweist, mit einer koaxial zum Fangrost angeordneten, zu einer Abwurfstelle außerhalb der Flüssigkeit führenden Fördereinrichtung mit einer angetriebenen Förderschnecke, wobei die Fördereinrichtung im Bereich des Fangrostes einen Einwurftrichter für das Rechen- und/oder Siebgut aufweist, und mit einer über dem Einwurftrichter ortsfest angeordneten Ablöseeinrichtung für das Rechen- und/oder Siebgut von dem Fangrost. Diese Vorrichtung ist insbesondere in Kläranlagen einsetzbar, kann jedoch auch in anderen Bereichen, beispielsweise in der Textilindustrie, in Schlachthöfen, Geflügelfarmen, Gerbereien usw. verwendet werden.

Eine Vorrichtung der eingangs beschriebenen Art ist aus der DE-A-34 20 157 bekannt. Die Fördereinrichtung ist in der Achse des Zylindermantels des Fangrostes angeordnet und besteht aus einem Gehäuse und einer Förderschnecke, wobei das Gehäuse im Bereich des Fangrostes in einen Einwurftrichter übergeht. Der Fangrost ist hier als Siebrost ausgebildet, also beispielsweise mit einer Schlitzlochung versehen. Er ist über den Umfang geschlossen durchgehend ausgebildet und wird umlaufend angetrieben, so daß sich das Rechen- und/oder Siebgut an der Innenseite des Fangrostes ablagert und bei dem Antrieb des Fangrostes nach oben aus dem Wasserspiegel heraus gefördert wird. Es erfolgt also vorteilhaft keine Übergabe des Rechen- und/oder Siebguts unterhalb der Wasseroberfläche von einem Element zu einem anderen. Eine mit dem Fangrost zusammenarbeitende Ablöseeinrichtung für das Rechen- und/oder Siebgut ist auf der Außenseite des Fangrosts ortsfest angeordnet und ist zum Abwurf des abgelösten Rechen- und/oder Siebguts in den Einwurftrichter hinein gedacht. Die Ablöseeinrichtung kann eine Bürste und/oder Spritzwasserdüsen aufweisen. Bei dieser Vorrichtung ist nachteilig, daß das Rechen- und/oder Siebgut unkontrolliert und an örtlich durchaus unterschiedlichen Stellen, also nicht nur im Bereich der Ablöseeinrichtung, von der Innenwandung des Fangrostes bei dessen Umlauf herabfällt. Dabei fällt es auch neben den Einwurftrichter, so daß es erneut in die Flüssigkeit gelangt und wieder mit dem Fangrost abgeschieden werden muß. Um dem unkontrollierten Herabfallen des Rechen- und/oder Siebguts entgegen zu wirken, ist der innere Umfang des Fangrosts mit Leitblechen versehen, die auf das Rechen- und/oder Siebgut eine stabilisierende Wirkung ausüben, so daß es bis zu der Stelle am inneren Umfang des Fangrosts hängenbleibt, an der sich die Ablöseeinrichtung außerhalb des Fangrosts befindet. Wegen dieser Anordnung der Leitbleche auf der Innenseite des Fangrosts muß die Ablöseeinrichtung auf der Außenseite des Fangrosts angeordnet sein. Die Anordnung der Leitbleche versperrt jedoch den Freiraum im Innenraum des Fangrosts zu einem gewissen Teil und wirkt sich somit auf die Gestaltung des Einwurftrichters nachteilig aus. Wenn der Fangrost mit der Förderschnecke verbunden ist, um nur einen gemeinsamen Antriebsmotor einzusetzen, dann geschieht dies durch einen Antriebsarm, der vor der offenen Stirnfläche des Fangkorbs angeordnet ist und die Welle der Förderschnecke mit dem Fangrost verbindet. Dieser Antriebsarm benötigt für seinen Umlauf auch einen entsprechenden Freiraum, der wiederum die Gestaltung des Einwurftrichters nachteilig beeinflußt. Insbesondere ist die der Strömungsrichtung im Gerinne zugekehrte Vorderwand des Einwurftrichters hierdurch in ihrer Höhe begrenzt. Damit ist wiederum die Füllhöhe des Fangrosts, also der Wasserstand, beschränkt, was eine Beschränkung der Durchflußmenge nach sich zieht. Auch die ausnutzbare Fangrostlänge ist beschränkt. Dies alles gilt umso mehr, je steiler die Achse der Vorrichtung im Gerinne schräggestellt angeordnet ist. Wird dagegen die Achse der Vorrichtung flacher schrägstehend im Gerinne angeordnet, dann vermindern sich die aufgezeigten Probleme, dafür treten wiederum andere Schwierigkeiten auf. Da die geschlossene Stirnfläche des Fangrosts keine Abscheidewirkung ausübt, wird bei dieser flacheren Anordnung die Ausnutzung des Fangrosts wiederum niedriger gelegt, was ebenfalls den ausnutzbaren Wasserstand erniedrigt. Wird nun die Vorrichtung in optimaler Schräglage angeordnet, dann ergeben sich geometrischkonstruktive Beschränkungen für die Gestaltung des Einwurftrichters, so daß dabei die Durchflußmenge beschränkt ist.

Aus der DE-A-30 19 127 ist ebenfalls eine Vorrichtung bekannt, die schrägstehend mit ihrer Achse angeordnet wird. Hier besteht jedoch der Fangrost aus stillstehend angeordneten Kreisringscheiben, die etwa über I/4 ihres Umfangs unterbrochen sind, wobei diese Unterbrechungsstelle oberhalb des Wasserstandes angeordnet ist. Dem stillstehenden Fangrost ist ein mit Räumgliedern besetzter Räumarm als Ablöseeinrichtung zugeordnet, der mit der Welle der Förderschnecke an ihrem unteren Ende verbunden ist und somit seinen Antrieb von der Förderschnecke bezieht. Wegen der schrägstehenden Anordnung der Vorrichtung in dem Gerinne mit einem etwa waagerecht durchgehenden Boden muß der Räumarm eine gekröpfte Formgebung aufweisen, die aber andererseits wiederum die Gestaltung der Wandung des Einwurftrichters beschränkt. Damit ergibt sich auch hier die Beschränkung des Wasserstandes und somit der Durchflußmenge sowie der ausnutzbaren Fangrostlänge. Neben dem Fangrost und den Räumgliedern des Räumarms ist zusätzlich noch als drittes Element ein Abstreifer vorgesehen, der beweglich ortsfest aufgehängt ist, so daß das Rechen- und Siebgut zunächst unterhalb der Wasseroberfläche aus seiner Abscheidelage an dem Fangrost auf das Räumglied übertragen, von diesem hochgefördert und durch Kontakt mit dem Abstreifer zum Abwurf in den Einwurftrichter gebracht werden muß. Die Übergabe des Rechen- und/oder Siebguts unter der Wasserlinie von einem Element auf das andere ist insofern nachteilig, als dabei ein gewisser Anteil aus der abgeschiedenen Position wieder in die Flüssigkeit gelangt. Auch ist nicht gewährleistet, daß der Abwurf des Rechen- und/oder Siebguts nur im Bereich des Abstreifers erfolgt. Das Rechen- und/oder Siebgut fällt vielmehr regelmäßig auch neben den Einwurftrichter durch den Schrägstand der Achse der Vorrichtung im Gerinne und durch die aufgezeigten geoemtrischen Bedingungen ist die Höhe der Vorderwand des Einwurftrichters begrenzt und bildet somit den Engpaß, die ausnutzbare Wasserstandshöhe und damit die Durchflußmenge. Weiterhin tritt nachteilig an dem feststehenden Fangrost eine Zopfbildung auf, d. h. es findet eine Abscheidung von Rechen- und/oder Siebgut an Stellen statt, die mit dem Räumglied nicht in Kontakt kommen. Insbesondere ist dies an den Stützblechen der Fall, auf denen die am Umfang unterbrochenen Kreisscheiben der Stabilität wegen abgestützt gelagert sind. Der Abstand der Kreisscheiben und damit die Weite der Spalte des Fangrosts muß eine gewisse Mindestgröße aufweisen. Eine Spaltbreite von 4 bis 5 mm kann herstellungsmäßig nicht unterschritten werden. Auch ist die Steuerung der Umlaufbewegung der Räumglieder kompliziert, weil diese einen Vor- und einen Rücklauf relativ zu dem Abstreifer einschließen muß, um eine verläßliche Abstreifwirkung zu erreichen.

Der Erfindung liegt die Aufgabe zugrunde, eine Vorrichtung der eingangs beschriebenen Art derart weiterzubilden, daß die aufgezeigten Nachteile zumindest stark reduziert sind. Insbesondere soll ein höherer Wasserstand und damit eine vergrößerte Durchflußmenge anwendbar sein und das am Fangrost abgeschiedene Rechen- und/oder Siebgut soll verläßlich in den Einwurftrichter abgeworfen werden.

Erfindungsgemäß wird dies bei der Vorrichtung der eingangs beschriebenen Art dadurch erreicht, daß der Fangrost aus einer Vielzahl von Ringscheiben besteht, die über den Umfang durchgehend mit Abstand zueinander schlitzbildend angeordnet sind, und daß als Ablöseeinrichtung ein Räumabstreifer vorgesehen ist, der in die Schlitze zwischen den Ringscheiben zumindest teilweise eingreift. Die über den Umfang durchgehend ausgebildeten Ringscheiben, die also nicht unterbrochen sind, verleihen der Vorrichtung im Bereich des Fangrosts eine erheblich verbesserte Stabilität und erleichtern die Herstellung. Durch die umlaufend ausgebildeten Schlitze wird es möglich, als Ablöseeinrichtung einen Abstreifer einzusetzen, der in die Schlitze zwischen den Ringscheiben u. U. zumindest teilweise eingreift, wodurch eine gegenüber einem Siebrost verbesserte Reinigungswirkung im Bereich des Räumabstreifers eintritt. Der Räumabstreifer kann mit Bezug auf den Fangrost innen oder außen angeordnet sein. In überraschender Weise ergibt sich damit die Möglichkeit, die Trichterwandung des Einwurftrichters höher auszubilden als bisher, um damit den Wasserstand und die Durchflußmenge zu erhöhen. Die mit der Anordnung eines Räumarms verbundenen Nachteile entfallen. Da der Fangrost nicht mehr stillsteht und keine stillstehenden Teile aufweist, entfällt eine Zopfbildung an dieser Stelle. Das Rechen- und/oder Siebgut lagert sich unterhalb der Wasserlinie nur an der Innenseite des Fangrosts ab und gelangt unterhalb der Wasserlinie mit keinem weiteren Element in Berührung. Im Bereich des Räumabstreifers findet ein Aufstauen des abzuscheidenden Materials statt, so daß die Abwurfstelle örtlich sehr genau festgelegt ist, so daß es in Verbindung mit der verbessert gestalteten Wandung des Einwurftrichters zu einem ordnungsgemäßen Abwurf des Rechen- und/oder Siebguts in den Einwurftrichter hinein und damit in die Fördereinrichtung hinein kommt. Der umlaufend angetriebene Fangrost kann im Bereich beider Stirnflächen, also doppelt, gelagert sein, während ein umlaufender Räumarm, wie er im Stand der Technik bekannt ist, nur einseitig gelagert werden kann. Durch die erfindungsgemäße Ausbildung des Fangrosts wird es möglich, auch bei einem umlaufend angetriebenen Fangrost die Vorteile der Abscheidewirkung für das Rechen- und/oder Siebgut zu nutzen, die durch die Verwendung von Ringscheiben bedingt ist und die bisher an stillstehend angeordneten Fangrosten bekannt war.

Der Räumabstreifer kann auf der Außenseite des Fangrosts angeordnet sein und von außen durch die Schlitze zwischen den Ringscheiben hindurchgreifen. Durch dieses Hindurchgreifen findet eine besonders gute Reinigungswirkung des Fangrosts statt. Es ist aber auch möglich, daß der Räumabstreifer auf der Innenseite des Fangkorbs angeordnet ist. Auf dieser Seite verkleinert er zwar durch seinen eigenen Platzbedarf die Konstruktionsmöglichkeiten für den Einwurftrichter. Diesem an sich gegebenen Nachteil kann jedoch entgegengewirkt werden, weil der Räumabstreifer und der Einwurftrichter beides stillstehend angeordnete Teile sind, die auf diese Art und Weise aufeinander abgestimmt werden können. Der Einwurftrichter kann entsprechend der Schräglage gegenüber dem Fangrost axial versetzt angeordnet und mit einer bis etwa zu dem Räumabstreifer hochgezogenen Trichterwandung versehen sein. Durch diese Möglichkeit der vergleichsweise höhergezogenen Trichterwandung wird eine erhöhte Füllhöhe zulässig, so daß die Vorrichtung bei gleicher Bauartgröße zur Bewältigung größerer Leistungen geeignet ist. Besonders vorteilhaft ist es, wenn die Trichterwandung mit dem Räumabstreifer verbunden ist. Für eine feste Verbindung zwischen den Teilen ergibt sich sogar die Möglichkeit, den Räumabstreifer auf der Trichterwandung ortsfest zu lagern. Durch den Wegfall eines Räumarms zwischen der Welle der Förderschnecke und dem Fangrost ergibt sich die Möglichkeit, die Trichterwandung im Bereich der offenen Stirnfläche des Fangrosts relativ zu der Achse des Fangrosts höher als im Bereich der geschlossenen Stirnfläche auszubilden, um den erhöhten Wasserstand und damit die vergrößerte Füllhöhe zulassen zu können.

Die Ringscheiben können bei gleichem Außendurchmesser unterschiedlich gestufte Innendurchmesser aufweisen, wobei der Räumabstreifer entsprechend den Innendurchmesser gestufte Ausnehmungen aufweist.

Für die Förderschnecke der Fördereinrichtung einerseits und für den Fangrost andererseits können je ein getrennter Antrieb vorgesehen sein. Damit ergibt sich auch eine Steuerung der beiden Antriebe, die unabhängig voneinander ist. Es ergibt sich die Möglichkeit, beispielsweise im Sommerbetrieb die Fördereinrichtung auch dann leer zu fahren, wenn der Fangrost nicht umläuft. Der Antrieb für den Fangrost ist zweckmäßig an der geschlossenen Seite des Fangrostes angreifend vorgesehen, an der genügend Platz zur Verfügung steht, den Antrieb mit seinem Motor und evtl. ein zwischengeschaltetes Getriebe zu lagern. Auch ist in diesem Bereich infolge der geschlossen ausgebildeten Stirnseite der Fangrost besonders stabil und zur Einleitung der Drehantriebskräfte geeignet.

Die Ringscheiben des Fangrosts können etwa dreieckige, abgerundete Querschnittsform aufweisen und so angeordnet sein, daß ihr engster Abstand der Durchströmrichtung des Fangrosts zugekehrt ist. Damit bildet die engste Stelle zugleich die Abscheidestelle für das Rechen- und/oder Siebgut bzw. Abscheidestelle und Durchtrittsspalt sind unmittelbar nebeneinander in einer Ebene angeordnet. Dies bedeutet weiterhin, daß solches Rechen- und/oder Siebgut, welches durch die engste Stelle zwischen zwei Ringscheiben am Fangrost hindurchgetreten ist, sich nicht zwischen zwei Ringscheiben verhaken kann, sondern in einem sich erweiternden Spalt hinweggespült wird. Auf diese Art und Weise können Steine oder andere harte Gegenstände sich nicht im Fangrost festklemmen.

Die Erfindung wird anhand der Zeichnungen weiter beschrieben. Es zeigen:

Figur 1 eine schematische Seitenansicht der Gesamtvorrichtung,

Figur 2 eine Ansicht in Richtung auf die offene Stirnseite des Fangrosts und

Figur 3 einen Längsschnitt durch einen Teil des Fangrosts zur Darstellung der Querschnittsform der Ringscheiben.

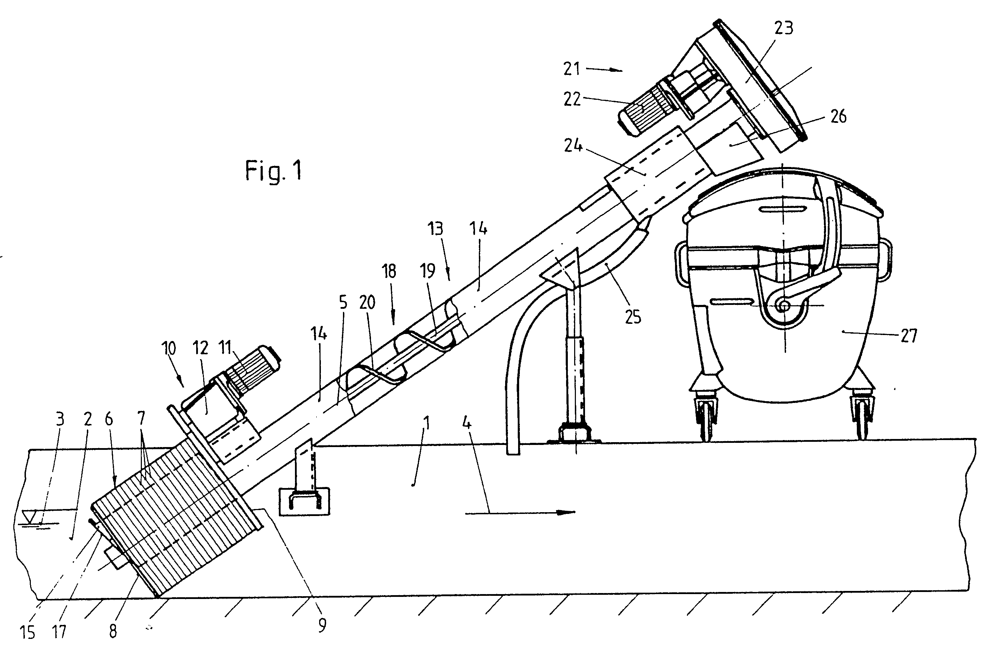

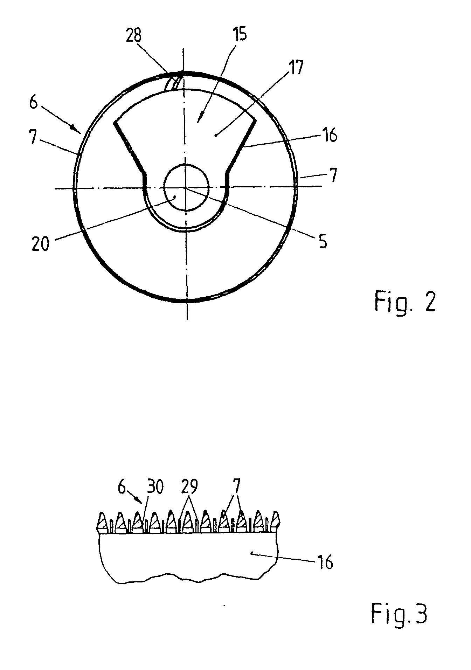

In Figur 1 ist ein Teil eines Gerinnes (1), in welchem eine mit Rechen- und/oder Siebgut verschmutzte Flüssigkeit (2) bis zu einem Wansserstand (3) in Richtung eines Pfeils (4) strömt. Die Vorrichtung ist mit ihrer Achse (5) schrägstehend im Gerinne (2) eingebaut, wobei der Einbauwinkel vorzugsweise etwa 35° betragen kann. Die Vorrichtung weist einen zylindermantelförmigen Fangrost (6) auf, der im wesentlichen aus über den Umfang durchgehend ausgebildeten Ringscheiben (7), die jeweils auf Abstand zueinander angeordnet sind (vgl. Figur 3) zusammen eingesetzt. Der Fangrost (6) weist anströmseitig eine offene Stirnfläche (8) und abströmseitig eine geschlossene Stirnfläche (9) auf. Der Fangrost (6) wird umlaufend um die Achse (5) angetrieben. Hierzu ist ein Antrieb (10) mit Motor (11) und ggf. Getriebe (12) vorgesehen.

Eine koaxial zur Achse (5) und zum Fangrost (6) angeordnete Fördereinrichtung (13) weist ein Gehäuse (14) auf, welches rohrförmig ausgebildet ist und sich über den größten Teil der axialen Länge der Fördereinrichtung (13) erstreckt. Am unteren Ende geht das Gehäuse (14) im Bereich des Fangrosts (6) in einen Einwurftrichter (15) über bzw. ist mit einem solchen Einwurftrichter (15) ausgestattet, der ebenso wie das Gehäuse (14) stillstehend angeordnet ist. Der Einwurftrichter (15) besitzt eine Trichterwandung (16) (Figur 2), die hochgezogen ausgebildet ist und an der tiefsten Stelle in die vordere Stirnwand (17) des Einwurftrichters übergeht. Wie Figur 1 erkennen läßt, ist die Stirnwand (17) leicht schräggestellt gegenüber der offenen Stirnfläche (8) des Fangrosts (6) so angeordnet, daß auch von der höchsten Stelle der ersten Ringscheibe (7) des Fangrosts (6) herabfallendes Rechen- und/oder Siebgut in den Einwurftrichter (17) gelangt. Durch die Stirnwand (17) wird der Wasserstand (3) begrenzt. Da die Stirnwand (17) und teilweise auch die Trichterwandung (16) vergleichsweise sehr hochgezogen ausgebildet sind, kann ein hoher Wasserstand (3) zugelassen werden, so daß der Fangrost (6) auf einem insoweit vergrößerten Teil seiner Fläche beaufschlagt wird, wodurch sich die Leistung der Vorrichtung erhöht.

In dem Gehäuse (14) und dem Einwurftrichter (15) ist eine Förderschnecke (18) mit Welle (19) und Förderwendel (20) angeordnet, die über einen Antrieb (21) und Getriebe (23) in Drehantrieb versetzt wird. Das Gehäuse (14) kann im oberen Bereich durchbrochen ausgebildet sein und von einem Mantel (24) umgeben sein, um bei der Verdichtung des Rechen- und/oder Siebguts abgeschiedene Flüssigkeit über eine Leitung (25) in das Gerinne (1) zurückzubefördern, während das entwässerte und verdichtete Siebgut über eine Schurre (26) in einen Container (27) abgeworfen wird.

Als Ablöseeinrichtung ist dem umlaufend angetriebenen Fangrost (6) ein Räumabstreifer (28) zugeordnet, der stillstehend angeordnet ist, und zwar entweder außerhalb oder innerhalb des Fangrosts (6). Der Räumabstreifer (28) kann auch pendelnd ortsfest aufgehängt sein. Er besitzt im allgemeinen die Form von Zinken (29), die zumindest teilweise in Durchtrittsspalte (30) zwischen den Ringscheiben (7) eingreifen. Das Eingreifen bzw. Durchgrefien der Zinken (29) kann von außen nach innen oder auch von innen nach außen, jeweils relativ zu den Ringscheiben (7) des Fangkorbes erfolgen. Gemäß Figur 2 und 3 ist der Räumabstreifer innerhalb des Fangkorbs (6) angeordnet, beispielsweise auf oder an dem Einwurftrichter (15) gelagert, so daß die einzelnen Zinken (30) von innen nach außen durch die Durchtrittsspalte (30) zwischen den Ringscheiben (7) des Fangkorbs (6) hindurchgreifen. Die Ringscheiben (7) können die in Figur 3 dargestellte, im Querschnitt etwa dreieckig gestaltete Dreiecksform mit abgerundeten Ecken aufweisen, so daß der Strömungsrichtung zugekehrt die engsten Stellen zwischen den Ringscheiben (7) gebildet werden, also dort, wo auch das Rechen- und/oder Siebgut abgelagert wird. In Strömungsrichtung durch die Durchtrittsspalte (30) erweitern sich somit diese engsten Stellen, so daß solches Rechen- und/oder Siebgut, welches durch die engsten Stellen hindurchgetreten ist, praktisch sich nicht mehr zwischen den Ringscheiben (7) verkeilen oder einklemmen kann.

Die Vorrichtung läßt sich auf verschiedene Art und Weise betreiben. In der Regel wird der Fangkorb (6) in zeitlichen Abständen jeweils eine Umdrehung umlaufend angetrieben. In den Stillstandszeiten des Fangrosts (6) setzt sich das Rechen- und/oder Siebgut am inneren Umfang des Fangrosts (6) zwischen den Ringscheiben (7) ab, wobei sich in Abhängigkeit von der Zeit eine Aufstauung des abzuscheidenden Guts bzw. der Schichtdicke ergibt. Hierdurch erhöht sich der Durchflußwiderstand des Fangrosts (6) im Gerinne (1), so daß der Wasserspiegel (3) ansteigt. In Abhängigkeit von einem gewissen Wasserstand (3), der nicht höher sein darf als die niedrigste Stelle der Stirnwand (17) des Einwurftrichters (15) wird der Antrieb (10) eingeschaltet, so daß der Fangrost (6) mindestens eine Umdrehung umlaufend angetrieben wird. Dabei wird das auf dem inneren Umfang des Fangrosts (6) abgelagerte Rechen- und/oder Siebgut ohne Übergabe an andere Elemente aus der Flüssigkeit herausgeführt und gelangt in den Bereich des ortsfesten Räumabstreifers (28) oberhalb des Wurftrichters (15). Der Räumabstreifer (28) sorgt dafür, daß das Rechen- und/oder Siebgut von der Ablagerungsfläche am Fangrost (6) abgenommen wird und in den Einwurftrichter (15) herabfällt. Gleichzeitig wird damit die Abscheidefläche des Fangrosts (6) gereinigt und steht zur erneuten Benutzung zur Verfügung. Es versteht sich, daß bei sehr hoher Belastung der Fangrost (6) auch dauernd umlaufend angetrieben werden kann, so daß eine kontinuierliche Abscheidewirkung eintritt.

Das zwischen die Förderwendel (20) der Förderschnecke (18) der Fördereinrichtung (13) fallende Rechen- und/oder Siebgut wird von der sich drehenden Förderschnecke (18) in dem Gehäuse (14) nach oben mitgenommen und dabei verdichtet und entwässert. Das Wasser fließt im Gehäuse (14) nach unten in das Gerinne (1) zurück. Am oberen Ende der Fördereinrichtung (13) vor der Schurre (26) findet eine regelrechte Kompaktierung statt, wobei zusätzliches Wasser über die Leitung (25) abgeschieden wird. Das Rechen- und/oder Siebgut in kompakter, verdichteter Form wird in den Container (27) abgeworfen. Es versteht sich, daß auch der Antrieb (21) für die Fördereinrichtung (13) kontinuierlich oder diskontinuierlich angetrieben werden kann, und zwar in Abstimmung zu dem Antrieb (10) des Fangrots (6). So ist es im Sommerbetrieb z. B. bei einer Kläranlage möglich, den Fangrost (6) dieserhalb diskontinuierlich anzutreiben und die Fördereinrichtung (13) an jeden Umlauf des Fangrosts (6) solange zu betreiben, bis das abgeworfene Rechen- und/oder Siebgut auch in den Container (27) abgeworfen ist, damit einer Geruchsbelästigung möglichst entgegengewirkt wird. Andererseits ist es aber auch möglich, das Rechen- und/oder Siebgut in der Fördereinrichtung (13) aufzustauen und einen möglichst langsamen Durchlauf durch diese anzustreben, damit eine erhebliche Entwässerungswirkung eintritt.

## Patentansprüche

1. Vorrichtung zum Entfernen von Rechen- und/oder Siebgut aus in einem Gerinne (1) strömender Flüssigkeit (2), mit einem schräggestellten, teilweise in die Flüssigkeit eintauchenden zylindermantelförmigen und umlaufend angetriebenen Fangrost (6), der anströmseitig eine offene und abströmseitig eine geschlossene Stirnfläche aufweist, mit einer koaxial zum Fangrost (6) angeordneten, zu einer Abwurfstelle außerhalb der Flüssigkeit führenden Fördereinrichtung (13) mit einer angetriebenen Förderschnecke (18), wobei die Fördereinrichtung (13) im Bereich des Fangrosts (6) einen Einwurftrichter (15) für das Rechen- und/oder Siebgut aufweist, und mit einer über dem Einwurftrichter (15) ortsfest angeordneten Ablöseeinrichtung für das Rechen- und/oder Siebgut von dem Fangrost (6), dadurch gekennzeichnet, daß der Fangrost (6) aus einer Vielzahl von Ringscheiben (7) besteht, die über den Umfang durchgehend mit Abstand zueinander schlitzbildend angeordnet sind, und daß als Ablöseeinrichtung ein Räumabstreifer (28) vorgesehen ist, der in die Schlitze zwischen den Ringscheiben (7) zumindest teilweise eingreift.

2. Vorrichtung nach Anspruch 1, dadurch gekennzeichnet, daß der Räumabstreifer (28) auf der Außenseite des Fangrosts (6) angeordnet ist und von außen durch die Schlitze zwischen den Ringscheiben (7) hindurchgreift.

3. Vorrichtung nach Anspruch 1, dadurch gekennzeichnet, daß der Räumabstreifer (28) auf der Innenseite des Fangrosts (6) angeordnet ist.

4. Vorrichtung nach Anspruch 1, dadurch gekennzeichnet, daß der Einwurftrichter (15) gegenüber dem Fangrost (6) axial versetzt angeordnet und mit einer bis etwa zu dem Räumabstreifer (28) hochgezogenen Trichterwandung (16) versehen ist.

5. Vorrichtung nach Anspruch 4, dadurch gekennzeichnet, daß die Trichterwandung (16) mit dem Räumabstreifer (28) verbunden ist.

6. Vorrichtung nach Anspruch 4, dadurch gekennzeichnet, daß die Trichterwandung (16) im Bereich der offenen Stirnfläche (8) des Fangrosts (6) relativ zu der Achse (5) des Fangrosts (6) höher als im Bereich der geschlossenen Stirnfläche (9) ausgebildet ist.

7. Vorrichtung nach Anspruch 1, dadurch gekennzeichnet, daß die Ringscheiben (7) bei gleichem Außendurchmesser unterschiedlich gestufte Innendurchmesser aufweisen, und daß der Räumabstreifer (28) entsprechend den Innendurchmessern gestufte Ausnehmungen aufweist.

8. Vorrichtung nach Anspruch 1, dadurch gekennzeichnet, daß für die Förderschnecke der Fördereinrichtung (13) einerseits und für den Fangrost (6) andererseits je ein getrennter Antrieb (10, 21) vorgesehen ist.

9. Vorrichtung nach Anspruch 8, dadurch gekennzeichnet, daß der Antrieb (10) für den Fangrost (6) an der geschlossenen Stirnfläche (9) des Fangrosts angreifend vorgesehen ist.

10. Vorrichtung nach Anspruch 1, dadurch gekennzeichnet, daß die Ringscheiben (7) etwa dreieckig abgerundete Querschnittsform aufweisen und so angeordnet sind, daß ihr engster Abstand der Durchströmrichtung des Fangrosts (6) zugekehrt ist.

**Revendications**

1. Dispositif destiné à enlever, d'un liquide (2) coulant dans une rigole (1) des matières filtrées et/ou par tamisées, comportant une grille de retenue (6) en forme d'enveloppe cylindrique, disposée obliquement, plongeant partiellement dans le liquide et entraînée en rotation, laquelle présente du côté amont une surface frontale ouverte et du côté aval une surface frontale fermée, avec un dispositif de transport (13) muni d'une vis sans fin entraînée de transport (18), disposée coaxialement à la grille de retenue (6) et s'étendant jusqu'à un poste d'évacuation situé en dehors du liquide, le dispositif de transport (17) présentant dans la zone de la grille de retenue (6) une trémie d'alimentation (15) destinée aux matières filtrèes et/ou tamisées, et comportant un dispositif de séparation disposé de façon fixe au-dessus de la trémie d'alimentation (15) et destiné aux matières filtrées et/ou tamisées qui se trouvent sur la grille de retenue (6), caractérisé par le fait que la grille de retenue (6) est constituée par un grand nombre de disques annulaires (7) qui s'étendent sur un tour avec entre eux des écarts formant des fentes, et que l'on prévoit, en tant que dispositif de séparation un râcleur de nettoyage 28 qui pénètre au moins partiellement dans les fentes situées entre les disques annulaires (7).

2. Dispositif selon la revendication 1, caractérisé par le fait que le râcleur de nettoyage (28) est disposé sur le côté extérieur de la grille de retenue (6) et pénètre à partir de l'extérieur dans les fentes situées entre les disques annulaires (7).

3. Dispositif selon la revendication 1, caractérisé par le fait que le râcleur de nettoyage (28) est disposé du côté intérieur de la grille de retenue (6).

4. Dispositif selon la revendication 1, caractérisé par le fait que la trémie d'alimentation (15) est disposée avec un décalage axial par rapport à la grille de retenue et est munie d'une paroi de trémie qui s'élève approximativement jusqu'au râcleur de nettoyage (28).

5. Dispositif selon la revendication 4, caractérisé par le fait que la paroi de trémie (16) est reliée au râcleur de nettoyage (28).

6. Dispositif selon la revendication 4, caractérisé par le fait que la paroi de trémie (16) a une forme plus élevée par rapport à l'axe (5) de la grille de retenue (6), dans la zone de la surface frontale ouverte (8) de la grille de retenue (6), que dans la zone de la surface frontale fermée (9).

7. Dispositif selon la revendication 1, caractérisé par le fait que les disques annulaires (7) présentent, pour le même diamètre extérieur, des diamètres intérieurs formant des degrés différents et que le râcleur de nettoyage (28) présente des évidements qui forment des degrés correspondant aux diamètres intérieurs.

8. Dispositif selon la revendication 1, caractérisé par le fait que pour la vis sans fin de transport du dispositif de transport (13) on prévoit un entraînement séparé (10, 21) dans chaque cas, d'une part pour la vis sans fin de transport du dispositif de transport (13) et d'autre part pour la grille de retenue (6).

9. Dispositif selon la revendication 8, caractérisé par le fait que l'entraînement (10) de la grille de retenue (6) est prévu pour attaquer sur la surface frontale fermée (9) de la grille de retenue.

10. Dispositif selon la revendication 1, caractérisé par le fait que les disques annulaires (7) présentent une forme de section transversale sensiblement triangulaire arrondie et qu'ils sont disposés de façon telle que leur écart le plus étroit est dirigé face au sens d'écoulement dans la grille de retenue (6).

**Claims**

1. Device for the removal of raked and/or strained material from liquid (2) flowing in a channel (1), with an inclined cylinder-jacket-shaped catching grate (6) driven in rotation and partially immersed in the liquid which has an open end face on the upstream side and a closed end face on the downstream side, with a conveyor system (13) arranged coaxially to the catching grate (6) and leading to a discharge point outside of the liquid, with a driven worm conveyor (18), the conveyor system (13) having, in the region of the catching grate (6), a hopper (15) for the raked and/or strained material, and with a separating device — fixed above the hopper (15) — for the raked and/or strained material from the catching grate (6), characterized in that the catching grate (6) comprises a multitude of ring discs (7) which are arranged continuously over the circumference with spaces between them forming slots, and that a stripper (28) is provided as separating device which engages at least partially in the slots between the ring discs (7).

2. Device according to Claim 1, characterized in that the stripper (28) is located on the outside of the catching grate (6) and passes from the outside through the slots between the ring discs (7).

3. Device according to Claim 1, characterized in that the stripper (28) is located on the inside of the catching grate (6).

4. Device according to Claim 1, characterized in that the hopper (15) is located axially offset in relation to the catching grate (6) and is provided with a hopper wall (16) raised up to approximately the stripper (28).

5. Device according to Claim 4, characterized in that the hopper wall (16) is connected with the stripper (28).

6. Device according to Claim 4, characterized in that the hopper wall (16) in the region of the open end face (8) of the catching grate (6) is formed higher in relation to the axle (5) of the catching grate (6) than in the region of the closed end face (9).

7. Device according to Claim 1, characterized in that the ring discs (7), with the same external diameter, have different, graduated internal diameters, and that the stripper (28) has graduated recesses according to the internal diameters.

8. Device according to Claim 1, characterized in that a separate drive (10, 21) is provided in each case for the worm conveyor of the conveyor system (13) on the one hand, and for the catching grate (6) on the other hand.

9. Device according to Claim 8, characterized in that the drive (10) for the catching grate (6) is provided on the closed end face (9) of the catching grate.

10. Device according to Claim 1, characterized in that the ring discs (7) have a roughly triangular, rounded-off cross-sectional form and are arranged so that their narrowest space is turned to the direction of flow of the catching grate (6).

Fig. 1

EP 0 259 547 B1

Fig. 2

Fig. 3